# EUROPEAN PATENT SPECIFICATION

(11) **EP 1 535 772 B1**
(45) Date of publication and mention of the grant of the patent: **16.04.2008**
(21) Application number: 04257238.8
(22) Date of filing: 22.11.2004
(51) Int. Cl.: B60H 1/00

(54) **Air conditioning system for vehicles**
Kraftfahrzeugklimaanlage
Système de climatisation pour véhicules

(30) Priority: 28.11.2003 JP 2003399178
(43) Date of publication of application: 01.06.2005
(73) Proprietor: Sanden Corporation, Isesaki-shi, Gunma 372-8502 (JP)
(72) Inventor: Nabeta, Yukio, c/o Sanden Corporation, Isesaki-shi, Gunma 372-8502 (JP); Ikeda, Susumu, c/o Sanden Corporation, Isesaki-shi, Gunma 372-8502 (JP); Sugawara, Yoshinobu, c/o Sanden Corporation, Isesaki-shi, Gunma 372-8502 (JP)
(74) Representative: Haley, Stephen

(56) References cited:
- EP-A- 1 134 103
- EP-A- 1 457 366
- DE-U1- 20 212 894
- GB-A- 2 036 299
- US-A- 3 924 524
- US-A- 6 101 828
- US-B1- 6 227 611
- PATENT ABSTRACTS OF JAPAN vol. 2000, no. 20, 10 July 2001 (2001-07-10) & JP 2001 063343 A (HITACHI CONSTR MACH CO LTD), 13 March 2001 (2001-03-13)

## Description

The present invention relates to an air conditioning system for vehicles, and, more specifically, to an air conditioning system for vehicles suitable to be mounted in a cabin of a work vehicle, etc. in which an air conditioning unit having an air path is made small, particularly, made thin.

An air conditioning system for vehicles, in particular, an air conditioning unit having a heat exchanger for absorbing heat (a heat absorbing heat exchanger) and a heat exchanger for radiating heat (a heat radiating heat exchanger), is used broadly for a usual vehicle, a work vehicle, etc. Recently, a requirement for making the air conditioning system small and saving a space for installation of the system has been increased, from the viewpoint of improving a comfortableness in a vehicle interior or a working environment for a driver.

In particular, in a case of a work vehicle, because a space of a front portion of a cabin (a front portion of a vehicle interior) is formed small from the structure of the cabin, an air conditioning unit is installed at a rear portion of the cabin, particularly, at a position behind a driver's seat (for example, JP-A-2001-63343).

However, when an air conditioning unit is installed at a rear portion of a cabin, because it is necessary to connect from the air conditioning unit to respective temperature-controlled air discharge ports (for example, DEF-mode air discharge port, VENT-mode air discharge port and FOOT-mode air discharge port) using long ducts and to form required air paths, the resistance for air passage may increase and the performance of the air conditioning system may reduce. In order to suppress this problem, although it is considered to make a blower larger, it causes a cost up for manufacturing the system, and it obstructs to the requirement for making the system small. Further, in a conventional air conditioning system using a long duct, the workability for installing the system may reduce, and it may be hard to satisfy the requirement of cost down.

EP-A-1134103 discloses an air conditioning system with an air conditioning unit with heat radiating and heat absorbing exchanges.

It would be desirable to provide an air conditioning system for vehicles, in particular, suitable for work vehicles, which can accelerate to make the system small and to save the space for installation thereof, and which can shorted a length of an air path from an air conditioning unit to a vehicle interior portion, thereby preventing the reduction of the performance of the system and the cost up for manufacturing the system.

According to the present invention there is provided a vehicle with air conditioning system having an air conditioning unit in which an air path is formed, a heat absorbing heat exchanger and a heat radiating heat exchanger being disposed in said air path in an air flow direction in this order, said air conditioning unit having an air mixing damper for adjusting a flow rate of an amount of air passing through said heat radiating heat exchanger to an amount of air bypassing said heat radiating heat exchanger after passing through said heat absorbing heat exchanger, arranged such that when said air conditioning unit is disposed in a front portion of a vehicle interior to be inclined relative to a horizontal plane of a vehicle, said heat absorbing heat exchanger is disposed to be inclined, relative to an extending direction of said air path being inclined, toward a direction in which an extending direction of said heat absorbing heat exchanger realizes a vertical direction, and characterised in that the vehicle has an inclined front surface said air conditioning unit is disposed to be inclined along the front surface of said vehicle interior.

In this structure, since the heat absorbing heat exchanger is disposed to be inclined relative to an extending direction of the air part being inclined, so that the extending direction of the heat absorbing heat exchanger approaches a vertical direction, or so that the heat absorbing heat exchanger itself stands (extends) in a vertical direction, the heat absorbing heat exchanger can be disposed in the air path at a condition where the space in the air path is utilized as much as possible. Therefore, it becomes possible to make the size of the space at the portion in the air path of the air conditioning unit for disposing the heat absorbing heat exchanger to be as small as possible within a range in that an inconvenience such as an increase of resistance of air passage is not occur, and whereby it is achieved to make the system small and thin. Therefore, even in a vehicle in which the air conditioning system has not been installed at a front portion in a vehicle interior (for example, at a front portion in a cabin of a work vehicle) from the problem with space, it becomes possible to install the air conditioning system at a front portion in a vehicle interior. In such a structure, because the length of an air path from the air conditioning unit to respective air discharge ports into a vehicle interior can be shortened, the resistance of air passage can be reduced, and a desired essential air conditioning performance can be ensured. Further, because the length of an air duct for the air path can be shortened, the cost of the system can be reduced by the shortening.

Further, in the above-described structure, because the size of the heat absorbing heat exchanger itself', especially, the size of the heat exchange core portion thereof, can be ensured to be sufficiently large even if the heat absorbing heat exchanger is disposed to be inclined in the air path, a target heat absorbing ability is not damaged, and rather than that, it becomes possible to enlarge the area for air passage. Therefore, it is possible to reduce the resistance of air passage, and whereby, reduction of noise may be expected. In particular, by using a stacking-type heat exchanger in which heat transfer tubes and fins are alternately stacked, it is easily achieved to form a desired thin air conditioning unit while achieving the reduction of the resistance of air passage and the reduction of noise.

In the present invention, the air conditioning unit is disposed to be inclined along a front surface of a vehicle invention. In such a disposition of the air conditioning unit, it is possible to properly dispose the air conditioning unit even in a case where the front surface of the vehicle interior is inclined and the space of the front portion of the vehicle interior is small.

Further, in a case where the air conditioning unit is disposed to be inclined relative to the horizontal plane of the vehicle at an angle in a range of more than 0 degree (that is, almost parallel to the horizontal plane of the vehicle) to 75 degrees, in correspondence with this, the heat absorbing heat exchanger may be disposed to be inclined relative to the extending direction of the air path at an angle in a range of 15 degrees to less than 90 degrees. In such a structure, because the draining property of the heat absorbing heat exchanger may be increased while achieving a small and thin unit, an inconvenience, in that condensed water adheres to the surface of the heat exchanger and the resistance of air passage thereof increases, may be surely prevented. For example, when the inclination angle of the air conditioning unit is about a minimum angle of 0 degree, the inclination angle of the heat absorbing heat exchanger may be set at about a maximum angle of 90 degrees. On the other hand, when the inclination angle of the air conditioning unit is a maximum angle of 75 degrees, the inclination angle of the heat absorbing heat exchanger may be set at a minimum angle of 15 degrees. By such a setting, the draining property may be increased while achieving a small and thin unit. Where, if an appropriate drain groove for guiding condensed water is provided at an appropriate position under the heat absorbing heat exchanger, water draining may be achieved more adequately.

The air conditioning system according to the present invention is suitable for a vehicle which cannot ensure a sufficient space in a front portion of a vehicle interior because of its inclined front surface, in particular, for a work vehicle, that is, for an application to install it in a cabin of a work vehicle.

Thus, in the air conditioning system according to the present invention, it becomes possible to make the air conditioning unit small and thin, and even in a vehicle which cannot ensure a sufficient space in a front portion of a vehicle interior because of its inclined front surface, it becomes possible to dispose the air conditioning unit at an appropriate position in a front portion of a vehicle interior at a condition capable of satisfying its essential function. Therefore, the length of the air path (the length of an air duct) from the air conditioning unit to respective air discharge ports can be shortened, the reduction of the air conditioning performance can be prevented by reducing the pressure loss, and the cost for manufacturing the system and for installing the system can be reduced.

Further features and advantages of the present invention will be understood from the following detailed description of the preferred embodiment of the present invention with reference to the accompanying figures, of which:
Fig. 1 is a side view of a part of a work vehicle applied with an air conditioning system for vehicles according to an embodiment of the present invention.
Fig. 2 is an elevational view of a part of the work vehicle depicted in Fig. 1.
Fig. 3 is an enlarged side view of a portion of an air conditioning unit of the work vehicle depicted in Fig. 1.

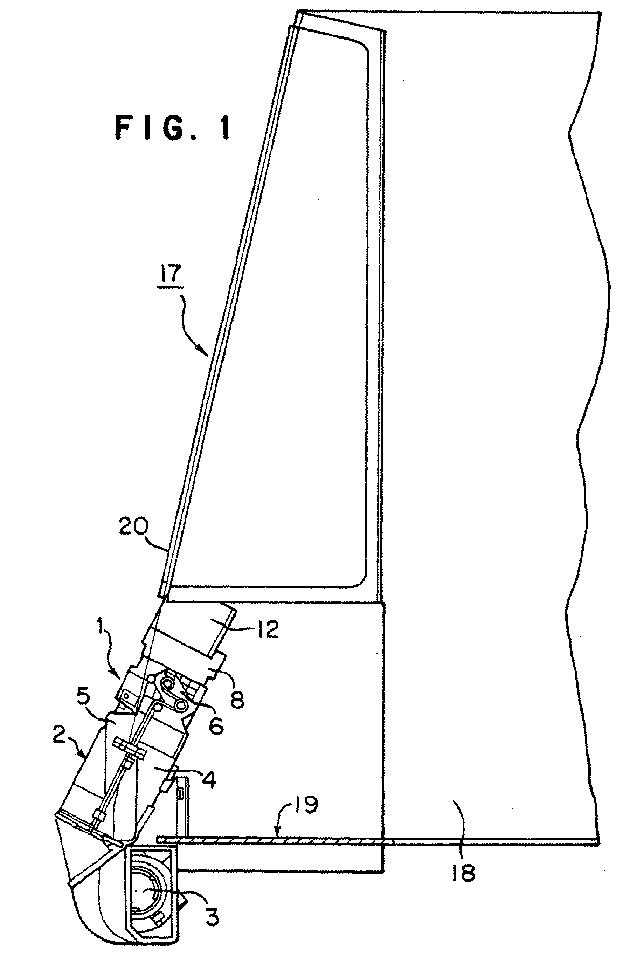

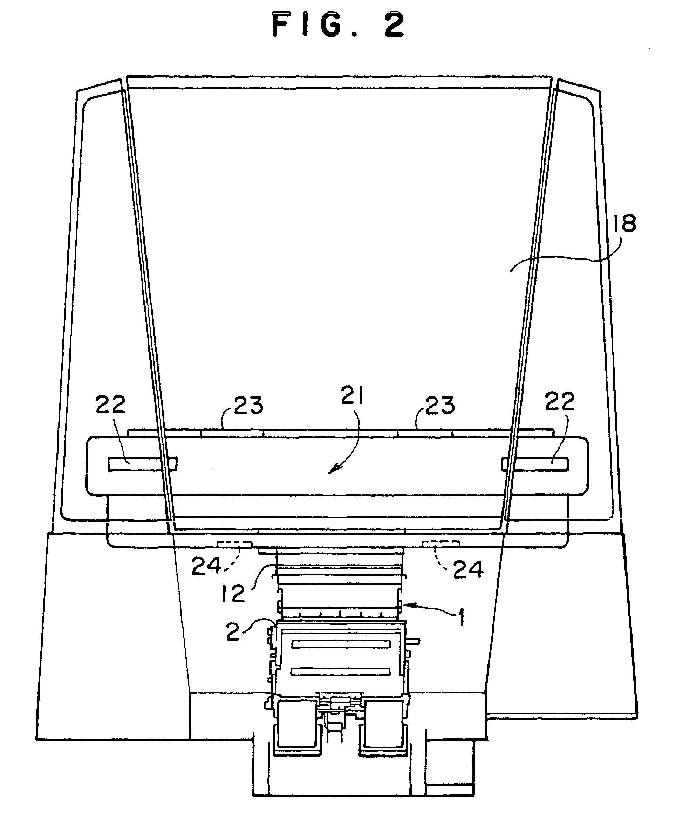

Figs. 1 to 3, show an air conditioning system for vehicles according to an embodiment of the present invention, in particular, a case where the air conditioning system is applied to a work vehicle. Air conditioning system 1 has an air conditioning unit 2 and a blower 3, and an air path 4 is formed in air conditioning unit 2. An evaporator 5 provided as a heat absorbing heat exchanger and a heater core 6 provided as a heat radiating heat exchanger are disposed in air path 4 in the air flow direction in this order. Evaporator 5 is disposed so as to cross the whole of air path 4, and heater core 6 is disposed is disposed so as to partially cross the air path 4. An air mixing damper 7 capable of being adjusted in its opening degree is provided at a position upstream or downstream of heater core 6 or at both positions (in this embodiment, at a position upstream of heater core 6). By adjusting the opening degree of air mixing damper 7, a flow rate of an amount of air passing through heater core 6 to an amount of air bypassing heater core 6 after passing through evaporator 5, in other words, a flow rate of an amount of air bypassing or passing through heater core 6 to the whole amount of air having passed through evaporator 5, can be adjusted. By this adjustment, the cooled air having passed through evaporator 5 is either passed through the bypass passage as it is, or mixed with air having been warmed by heater core 6 at a predetermined rate, thereby obtaining a desired discharge air temperature.

The temperature controlled air is sent into an air distribution box 8 provided at a downstream end portion of air path 4, and further mixed there and then sent out toward respective temperature controlled discharge air ports provided on respective parts of an inner panel 21 of a vehicle (for example, VENT-mode air discharge port 22, DEF-mode air discharge port 23 and FOOT-mode air discharge port 24) via an air passageway from respective air discharge ports 9, 10 and 11 and an air duct 12. Respective dampers 13, 14 and 15 capable of being independently opened/closed are provided to the respective air discharge ports 9, 10 and 11.

On the other hand, blower 3 is provided at a position upstream of evaporator 5 in air path 4. Air suction port to blower 3 may be appropriately provided depending upon requirements from the vehicle side, such as at a position of a side surface side or a rear surface side of air conditioning unit 2. For example, in a case where a double-shaft type blower is used as blower 3, the air suction port may be opened on each of both side surfaces of air conditioning unit 2.

In this embodiment, a double-shaft type blower is used as blower 3, and by a multi-blade fan provided in blower 3, air is sent toward the side of evaporator 5 through an inner air path formed along an involute curve of a blower casing of blower 3.

Evaporator 5 is formed as a stacking-type heat exchanger wherein flat heat transfer tubes (for example, each formed by a pair of plates) and fins are alternately stacked and both ends of the respective heat transfer tubes are connected to respective tanks. Further, in this embodiment, a drain guide groove 16 is provided on the inner wall of air path 4 positioned at the bottom side of evaporator 5 for draining the condensed water flowing down along the evaporator 3.

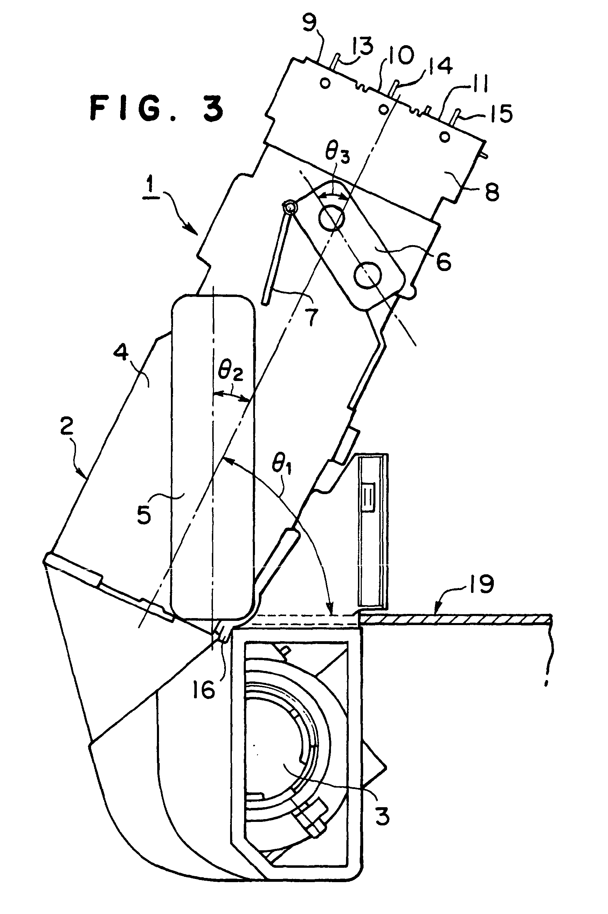

In this embodiment, air conditioning unit 2 is disposed to be inclined relative to a floor surface 19 forming a horizontal plane of a work vehicle 17 at a front portion of a cabin 17 of the work vehicle 17 (at a left-side portion in Fig. 1), at an inclination angle θ₁ in a range of more than 0 degree to 75 degrees. In the state shown in Fig. 1, air conditioning unit 2 is disposed along a front surface 20 of work vehicle 17. When air conditioning unit 2 is thus disposed to be inclined relative to floor surface 19, similarly air path 4 is disposed also to be inclined relative to floor surface 19. Further, in this embodiment, evaporator 5 provided as a heat absorbing heat exchanger is disposed to be inclined, relative to an extending direction of inclined air path 4, toward a direction in which the extending direction of evaporator 5 realizes a vertical direction, particularly in this embodiment, so that evaporator 5 itself stands in a vertical direction. This inclination angle θ₂ of evaporator 5 relative to the extending direction of inclined air path 4 is set at an angle in a range of 15 degrees to less than 90 degrees. In Fig. 3, evaporator 5 is disposed so as to stands in a vertical direction relative to floor surface 19 (in a direction perpendicular to floor surface 19).

Further, in this embodiment, heater core 6 is also disposed to be inclined relative to the extending direction of inclined air path 4 in the same inclination direction as that of evaporator 5. This inclination angle θ₃ of heater core 6 is not particularly restricted, and the inclination angle θ₃ may be set an appropriate angle so that sufficiently large flow path area of heater core 6 for air passage and sufficiently large area of the bypass air path can be ensured.

In air conditioning system 1 thus constructed according to this embodiment, since evaporator 5 is inclined relative to the extending direction of inclined air path 4 so that the evaporator 5 itself stands in a vertical direction, it becomes possible to dispose the evaporator 5 at a condition utilizing the space in air path 4 as much as possible. Therefore, it becomes possible to smallen the space in air path 5 for the disposition of evaporator 5 as little as possible, and it may be achieved to make air conditioning unit 2,ultimately, the whole of the air conditioning system, to be small and thin. Consequently, air conditioning system 1 can be disposed at a front portion of cabin 18 of work vehicle 17, in which it has been difficult to dispose it at the front portion because a sufficiently wide space has not been able to be ensured at a front portion of cabin 18. In the structure according to this embodiment, as compared with a case where the air conditioning system is disposed at a rear portion of cabin 18 (at a right-side portion in Fig. 1), because the length of the air path from respective air discharge ports 9, 10 and 11 to respective temperature-controlled air discharge ports 22, 23 and 24, that is, the length of air duct 12, can be greatly decreased, the resistance of air passage may be reduced and the essential function of the air conditioning system may be exhibited sufficiently. Moreover, because the cost for manufacture and the cost for installation may be reduced by the decrease of the length of air duct 12, the cost of the whole of air conditioning system 1 may be reduced.

Further, in the above-described structure, although evaporator 5 is disposed to be inclined in air path 4, because the size of evaporator 5, particularly, the size of the heat exchange core portion thereof can be ensured to be sufficiently large, a desired target heat absorbing ability is not injured, and rather than that, it becomes possible to positively enlarge the area for air passage. Therefore, the reduction of the resistance of air passage may be further accelerated, and the air conditioning performance may be maintained at a high level. In this case, decrease of noise can also be expected. In particular, in this embodiment using a stacking-type heat exchanger, these advantages of smallening and thinning air conditioning unit 2 and reducing the resistance of air passage may be achieved more effectively.

Further, in a case air conditioning unit 2 is disposed to be inclined relative to the horizontal plane of the vehicle at an angle in a range of more than 0 degree to 75 degrees, by setting the inclination angle of evaporator 5 relative to the extending direction of air path 4 at an angle in a range of 15 degrees to less than 90 degrees in correspondence with the inclination of the air conditioning unit 2, the water draining property of evaporator 5 may be increased while the system is made small and thin. By such a structure, the inconvenience, wherein condensed water adheres to the surface of evaporator 5 and the resistance of air passage increases, may be easily prevented.

Furthermore, in a condition such as that in this embodiment where air conditioning system 1 is disposed at a front portion of cabin 18, because the conventional dead space can be utilized effectively, a wide space for a driver or a worker in cabin 18 may be easily ensured. Therefore, the comfortableness and the environment for working in cabin 18 may be greatly improved.

Thus, the present invention is suitable to be applied particularly to a work vehicle in which it is hard to ensure a wide space in a cabin, and by this application, advantages such as prevention of reduction of air conditioning performance, reduction of cost and improvement of working environment may be obtained.

## Claims

1. A vehicle with air conditioning system (1) having an air conditioning unit (2) in which an air path (4) is formed, a heat absorbing heat exchanger (5) and a heat radiating heat exchanger (6) being disposed in said air path in an air flow direction in this order, said air conditioning unit having an air mixing damper (7) for adjusting a flow rate of an amount of air passing through said heat radiating heat exchanger to an amount of air bypassing said heat radiating heat exchanger after passing through said heat absorbing heat exchanger, arranged such that when said air conditioning unit is disposed in a front portion of a vehicle interior to be inclined relative to a horizontal plane of a vehicle, said heat absorbing heat exchanger is disposed to be inclined, relative to an extending direction of said air path being inclined, toward a direction in which an extending direction of said heat absorbing heat exchanger realizes a vertical direction, and **characterised in that** the vehicle has an inclined front surface (20), wherein said air conditioning unit (2) is disposed to be inclined along the front surface (20) of said vehicle interior.

2. The vehicle according to claim 1 wherein, when said air conditioning unit (2) is disposed to be inclined relative to said horizontal plane of said vehicle at an angle in a range of more than 0 degree to 75 degrees, said heat absorbing heat exchanger (5) is disposed to be inclined relative to said extending direction of said air path at an angle in a range of 15 degrees to less than 90 degrees.

3. The vehicle according to any preceding claim, wherein said heat absorbing heat exchange (5) is disposed to extend in a direction substantially perpendicular to said horizontal plane of said vehicle.

4. The vehicle according to any preceding claim, wherein the vehicle is a work vehicle and wherein said air conditioning unit (2) is installed in a cabin of the vehicle.

5. The vehicle according to any preceding claim, wherein at least one of said heat absorbing heat exchanger (5) and said heat radiating heat exchanger (6) is formed as a stacking-type heat exchanger in which heat transfer tubes and fins are alternately stacked.

## Patentansprüche

1. Fahrzeug mit einer Klimaanlage (1), aufweisend ein Klimagerät (2) in dem ein Luftpfad (4) ausgebildet ist, einen wärmeabsorbierenden Wärmetauscher (5) und einen wärmeabstrahlenden Wärmetauscher (6), die in dieser Reihenfolge in Luftströmungsrichtung im Luftpfad angeordnet sind, wobei das Klimagerät einen Luftmischschieber (7) zum Anpassen eines Durchflussverhältnisses von einer Luftmenge, die den wärmeabstrahlenden Wärmeaustauscher durchläuft, zu einer Luftmenge, die nach einem Durchlaufen des wärmeabsorbierenden Wärmetauschers den wärmeabstrahlenden Wärmetauscher umgeht, aufweist, wobei der wärmeabsorbierende Wärmetauscher derart angeordnet ist, dass er zu einer horizontalen Ebene eines Fahrzeugs relativ geneigt ist, wenn das Klimagerät in einem vorderen Abschnitt eines Fahrzeuginnenraums angeordnet ist, wobei der wärmeabsorbierende Wärmetauscher derart angeordnet ist, das er relativ zu einer Erstreckungsrichtung des Luftpfads geneigt ist, zu einer Richtung, in der eine Erstreckungsrichtung des wärmeabsorbierenden Wärmetauschers eine vertikale Richtung realisiert, **dadurch gekennzeichnet, dass** das Fahrzeug eine geneigte Vorderoberfläche (20) aufweist, wobei das Klimagerät (2) so angeordnet ist, dass es entlang der Vorderoberfläche (20) des Fahrzeuginnenraums geneigt ist.

2. Fahrzeug nach Anspruch 1, wobei, wenn das Klimagerät (2) derart angeordnet ist, dass es relativ zur horizontalen Ebene des Fahrzeugs mit einem Winkel im Bereich von größer als 0° bis 75° geneigt ist, der wärmeabsorbierende Wärmetauscher (5) derart angeordnet ist, dass er relativ zur Erstreckungsrichtung des Luftpfads mit einem Winkel in einem Bereich von 15° bis ausschließlich 90° geneigt ist.

3. Fahrzeug nach einem der vorhergehenden Ansprüche, wobei der wärmeabsorbierende Wärmetauscher (5) derart angeordnet ist, dass er sich in eine Richtung, die im Wesentlichen senkrecht zur horizontalen Ebene des Fahrzeugs ist, erstreckt.

4. Fahrzeug nach einem der vorgehenden Ansprüche, wobei das Fahrzeug ein Arbeitsfahrzeug ist, und wobei das Klimagerät (2) in einer Fahrzeugkabine eingebaut ist.

5. Fahrzeug nach einem der vorhergehenden Ansprüche, wobei mindestens ein wärmeabsorbierender Wärmetauscher (5) und ein wärmeabstrahlender Wärmetauscher (6) als Wärmetauscher der geschichteten Art ausgebildet ist, bei dem abwechselnd wärmeübertragende Rohre und Rippen gestapelt sind.

## Revendications

1. Véhicule avec un système (1) de conditionnement d'air, possédant une installation de conditionnement d'air (2) dans laquelle est formé un chemin (4) pour l'air, un échangeur de chaleur (5) absorbant la chaleur, et un échangeur de chaleur (6) rayonnant la chaleur étant disposés dans ledit trajet pour l'air, dans cet ordre dans une direction d'écoulement de l'air, ladite installation de conditionnement d'air possédant un registre (7) de mélange d'air, pour ajuster un débit et une quantité d'air traversant ledit échangeur de chaleur rayonnant la chaleur, à une quantité d'air contournant ledit échangeur de chaleur rayonnant la chaleur après avoir traversé ledit échangeur de chaleur absorbant la chaleur, agencé de telle sorte que, lorsque ladite installation de conditionnement d'air est disposée dans une partie frontale d'un intérieur de véhicule pour être inclinée par rapport à un plan horizontal d'un véhicule, ledit échangeur de chaleur absorbant la chaleur est disposé pour être incliné, par rapport à une direction d'extension dudit trajet pour l'air qui est incliné, dans une direction dans laquelle une direction d'extension dudit échangeur de chaleur absorbant la chaleur réalise une direction verticale, et **caractérisé en ce que** le véhicule possède une surface frontale inclinée (20), ladite installation de conditionnement d'air (2) étant disposée pour être inclinée le long de la surface frontale (20) dudit intérieur de véhicule.

2. Véhicule selon la revendication 1, dans lequel ladite installation de conditionnement d'air (2) est disposée pour être inclinée par rapport audit plan horizontal dudit véhicule suivant un angle dans un intervalle de plus de 0 degré à 75 degrés, ledit échangeur de chaleur absorbant la chaleur (5) est disposé pour être incliné par rapport à ladite direction d'extension dudit trajet pour l'air suivant un angle dans un intervalle de 15 degrés à moins de 90 degrés.

3. Véhicule selon l'une quelconque des revendications précédentes, dans lequel ledit échangeur de chaleur absorbant la chaleur (5) est disposé pour s'étendre dans une direction sensiblement perpendiculaire audit plan horizontal dudit véhicule.

4. Véhicule selon l'une quelconque des revendications précédentes, dans lequel le véhicule est un véhicule de travail, et dans lequel ladite installation de conditionnement d'air (2) est installée dans une cabine du véhicule.

5. Véhicule selon l'une quelconque des revendications précédentes, dans lequel au moins l'un parmi ledit échangeur de chaleur absorbant la chaleur (5) et ledit échangeur de chaleur rayonnant la chaleur (6) est formé comme un échangeur de chaleur du type à empilement, dans lequel des tubes échangeurs de chaleur et des ailettes sont empilés alternativement.
